# EUROPEAN PATENT SPECIFICATION

(11) **EP 3 383 209 B1**
(45) Date of publication and mention of the grant of the patent: **13.05.2020**
(21) Application number: 16791447.2
(22) Date of filing: 29.10.2016
(51) Int. Cl.: A41D 31/12, A41D 31/14, A41D 27/28, A41D 3/00

(54) **VENTILATED AND BREATHABLE GARMENT STRUCTURE**
BELÜFTETE UND ATMUNGSAKTIVE BEKLEIDUNGSSTRUKTUR
STRUCTURE DE VÊTEMENT VENTILÉE ET PERMÉABLE À L'AIR

(30) Priority: 02.12.2015 US 201562262163 P
(43) Date of publication of application: 10.10.2018
(73) Proprietor: Geox S.p.A., 31044 Montebelluna, Frazione Biadene (IT)
(72) Inventor: MORETTI POLEGATO, Mario, Crocetta del Montello (TV) (IT); BERGAMIN, Mirco, Castelfranco Veneto (TV) (IT)
(74) Representative: Farago-Schauer, Peter Andreas
(86) International application number: PCT/IB2016/056542
(87) International publication number: WO 2017/093824

(56) References cited:
- EP-A1- 1 972 217
- WO-A1-96/24263
- WO-A1-99/34972
- WO-A1-2007/107264
- DE-U1-202008 013 486

## Description

### TECHNICAL FIELD

The present disclosure relates to a ventilated and breathable garment structure.

### BACKGROUND

It is known that humans wear garments and shoes in order to protect the body against atmospheric elements such as snow, rain, wind, and especially the cold. The protection of the human body occurs principally by resorting to various layers of clothing, of which the first, or underwear, is in direct contact with the body and is in turn covered by successive layers, depending on the outdoor temperature and the environmental conditions. It is therefore sufficient to add or remove one or more clothing layers to feel at ease and be at an optimal temperature.

The human body by its nature is endowed with "mechanisms" helping it to adapt thermally to its surroundings. In the presence of overheating, for example, the body responds by increased sweating which, in evaporating, enables a natural lowering of the body temperature. The heat produced by the human body, besides generating sweat, is also released to the outside by means of radiation or conduction. Such heat, which is always present, causes a warming of the air contained between the body and clothing, and in escaping upward, it produces further overheating and discomfort, for example, in the region of the shoulders and the back, which are zones of heat buildup.

To prevent this inconvenience, it is necessary to produce or maximize an air exchange (e.g., a ventilation effect) inside the clothing independently of the release of vapor, utilizing the pressure differences which are present between the inside and outside of the clothing. For example, with an external temperature of 5° C and relative humidity of 50%, and an internal temperature of 25° C and relative humidity equal to 90%, the resulting pressure difference is around 24 millibar, which is a non-negligible amount.

In the case when the water vapor is not able to escape from the protective wrapping around the human body (e.g., the clothes), the humidity increases until the vapor condenses and returns to the liquid state of sweat, drenching the clothes themselves starting with the underwear, which constitutes the first layer. Conventionally, this annoyance can be remedied by removing the clothing soaked or dampened by sweat and replacing it with another dry one. However, problems can arise in certain environments. For example, after strenuous mountain climbing, one can experience a sudden cooling of the body and the risk of pulmonitis and other ailments caused by chilling.

While on the one hand the protection of the human body from the most adverse conditions of cold is very effective due to the use of highly insulating materials, on the other hand, one cannot ignore the inability of allowing the body its normal transpiration, guaranteeing the escape of the water vapor produced by sweating. Clearly, during the warm season, this problem is more obvious and it forces many people to take several showers a day and continually change their clothing.

There have been efforts to remedy these inconveniences by using clothing having special breathable or vapor transfer characteristics, such as, by using a material commercially known under the brand "GORE-TEX®" held by the company W.L.GORE ASS. INC. However, this clothing is able to expel only a portion, often a minimal amount, of the vapor produced by sweating which is generated by the human body, especially in the areas having more sweat glands, and it is not able to ensure an effective air exchange inside the clothing. In fact, the degree of vapor transfer is reduced since partial vapor pressure sufficient to expel the sweat (in vapor phase) to the outside is not formed inside the layer of clothing.

In other cases, a remedy has been sought by creating apertures in the clothing, more or less closable, in the zones of greater sweat concentration, such as beneath the armpits. However, this solution also does not ensure a particularly desirable effect since no effective air exchange is created. Providing a larger number of apertures has also not produced satisfactory results. In practice, in fact, certain parts of clothing are always directly adherent to the body, especially the back and chest, so that the water vapor generated by the evaporation of sweat from the body remains confined between the body and the areas of clothing not adhering directly to it (e.g., generally the region of the stomach, the lumbar region of the back and especially the region beneath the armpits), preventing its escape. Other known solutions call for openings at the front of the garment, on the lateral portion and on the back, to create ventilation and prevent condensation of the water vapor generated by sweat inside the clothing.

Patent document US6263510 describes a garment having an external covering with a torso portion in which an intermediate lining is incorporated; a first ventilation aperture at the front part of the external covering, which extends via the torso/sleeve stitching, to the sleeve portions; a second ventilation aperture in the intermediate lining, to enable an air flow between the first and the second aperture in the intermediate lining. This solution is rather inconvenient because the body of the wearer is exposed directly to the external temperature, which is colder than the body temperature. A similar drawback is present with the solutions described in patent documents US3296626 and US5642526, which describe a garment with ventilation apertures in the chest region and the armpit.

Document WO9934972 teaches the making of a garment containing a channeled material and with front apertures in the area of the armpit, the arms and the wrists. The outside air enters, promoted by the movement of the body, from the frontal and axillary apertures, and is channeled toward the wrist apertures. The efficiency of this solution suffers from the fact that the moist warm air reaches the channels by crossing a layer of permeable material, and not with a specific connection between the inside of the garment in contact with the wearer and the channeled material.

To limit the direct exposure of the body of the wearer to the outside air, especially during cold or very windy weather, or particularly harsh winters, solutions have been proposed which call for the use of complicated mechanisms for opening and closing ventilation apertures, or movable panels which allow a partial opening, as taught for example in the patent documents US5704064, US5727256, US6070274, US7412728 and US7966668. The making of this type of garment involves a certain design complexity and high production costs, as well as requiring the involvement of the wearer, for example, upon entering more warm environments, where he must always remember to activate the system.

Moreover, according to the teaching of the document US5704064, the garment has regulatable front apertures and a channeled structure incorporated inside a fabric, which emerges in the bottom portion of the garment. Thus, besides having a complex structure, the front apertures directly expose the body of the wearer to the outer air. Patent document US3706102 describes a garment having apertures in the region of the armpit, the back, along the shoulders and below the neck, composed of a shaped material of three layers, one being an outer layer, another an intermediate layer, and one an inner layer. An external empty air chamber, is defined between the outer layer and the intermediate layer, and an inner chamber, filled with insulating material permeable to air, is defined between the intermediate layer and the inner layer.

Apertures provide communication between the inner chamber and the outer one and between the latter and the outside environment. In this way, the passage of the moist warm air from the inside of the garment to the outside occurs solely in the transverse direction, through the apertures between the inner and outer chamber and between the latter and the surroundings.

### SUMMARY

The goal of the embodiments disclosed herein is to realize a ventilated and breathable garment structure able to ensure a state of comfort for the human body and solving the problems mentioned with the known garments. As part of this goal, one purpose of the embodiments is to realize a garment structure able to ensure an adequate air exchange, while at the same time preventing dissipation of the warmth needed to protect the body against the cold. Another purpose of the embodiments is to enable the natural thermal regulation of the human body for all effects.

A further purpose is to ensure a level of transpiration and ventilation such that the wearer can move about more or less strenuously without getting cold or sweating within a broad temperature range, from warm to cold, and without perceiving a state of discomfort in event of rapid and sudden temperature variations. This goal, as well as these and other purposes which will appear more clearly in the following, are accomplished by a ventilated and breathable garment structure comprising: an inner layer facing the body of the wearer and extending for at least a portion of the garment, an intermediate layer of padding, forming together with said inner layer a first gap, an outer layer having air vents, for the entry of air from the outside and/or for the exit of moist warm air from inside the garment, and which forms together with the intermediate layer a second gap, said intermediate layer being comprised, at least in certain zones, of at least one channeled padding for the passage of said moist warm air and said air from the outside.

According to some embodiments, a ventilated and breathable garment structure includes an inner layer facing the body of a wearer of a garment and extending for at least a portion of the garment. The garment structure includes an intermediate layer of padding that forms together with the inner layer a first gap. The garment structure further includes an outer layer having air vents for the entry of air from the outside of the garment and/or for the exit of moist warm air from inside the garment, and that forms together with the intermediate layer a second gap. The intermediate layer includes, in one or more zones, at least one channeled padding for the passage of the moist warm air and the air from the outside.

In some embodiments, the air vents are made in the area of the channeled padding, or the air vents are configured to be always open.

In some embodiments, the air vents include first air vents for the entry of air from the outside and second air vents for exit of moist warm air from inside the garment.

In some embodiments, the inner layer has at least one first perforated portion in the area of at least the first air vents.

In some embodiments, the outer layer includes a breathable fabric in the area of each air vent.

In some embodiments, the outer layer comprises a membrane which is impermeable to water in the liquid state and permeable to water vapor.

In some embodiments, the first air vents (15a) are made in the area of the armpit of a garment of the coat, jacket, overcoat or similar type.

In some embodiments, the at least one second air vent is made in the area of the dorsal zone or the cervical zone.

In some embodiments, the air vents extend along the flanks of a garment of the coat, jacket, overcoat or similar type.

In some embodiments, at least one portion of the channeled padding extends into the dorsolumbar zone of a garment of the coat, jacket, overcoat or similar type, wherein preferably said channeled padding (18, 18', 118) extends into the dorsocervical zone of a garment of the coat, jacket, overcoat or similar type.

In some embodiments, the channeled padding has a substantially Y-shaped conformation, developing substantially up to a second air vent in the area of the dorsal zone, with a lower portion extending in substantially vertical direction, in regard to the position of the garment when worn, and with two upper diverging portions which develop up to first air vents in the area of the armpits of the garment, or wherein said channeled padding has a substantially Y-shaped conformation, developing substantially up to the dorsal zone, with a lower portion extending in substantially vertical direction, in regard to the position of the garment when worn, and with two upper diverging portions which develop up to the armpits of the garment.

In some embodiments, the channeled padding is composed of a three-dimensional textile having passages for moist warm air, defined by a series of channels disposed in the vertical direction relative to the position of wearing the garment and configured to transfer the moist warm air toward the air vents for the exit of the moist warm air, the structure preferably further includes parallel ribs alternating with the channels, wherein further preferably the textile of said channeled padding comprises:
a first inner web, facing the body of the wearer, being breathable and able to direct sweat in the liquid phase and in the vapor phase away from the body of the wearer, a second intermediate and spacing web, defining a gap and the ribs for the transfer of sweat in vapor phase from the first web to the outside, the ribs alternating with the channels, and a third outer and breathable web, wherein the second web is between the third web and the first web.

In some embodiments, the textile of the channeled padding includes a fleece on at least on the side of the third web, the fleece formed by means of brushing or napping of the fibers that form the web itself.

In some embodiments, the garment structure further includes at least one drawstring.

In some embodiments, the drawstring is located at the waist, the garment having entry openings which are always open or reversibly closable, the exit openings being always open, or wherein said drawstring is located at the lower end of the garment, which has exit openings that are always open, wherein preferably said garment further includes entry openings that are reversibly closable.

### BRIEF DESCRIPTION OF DRAWINGS

The accompanying drawings, which are incorporated herein and form part of the specification, illustrate various embodiments of the present disclosure and, together with the description, further serve to explain the principles of the disclosure and to enable a person skilled in the pertinent art to make and use the embodiments disclosed herein. In the drawings, like reference numbers indicate identical or functionally similar elements.

Further characteristics and advantages of the embodiments will emerge more clearly from the description of two preferred but not exclusive embodiments of the garment according to the embodiments, illustrated for information and not limitation in the enclosed drawings, where:
Fig. 1 illustrates a portion of the structure according to some embodiments in a lateral sectional view;
Fig. 2 illustrates a magnified portion of channeled padding in a perspective view;
Figs. 3A and 3B illustrate an example of a garment made with the structure according to some embodiments, seen from the front and opened;
Fig. 4 illustrates a portion of the garment of the previous figure, seen from the front and partly closed;
Fig. 5 illustrates the same garment of the two previous figures, seen from the rear;
Fig. 6 illustrates a variant of the channeled padding of Fig. 2;
Fig. 7 illustrates a variant of the protective outer covering;
Fig. 8 illustrates a portion of the structure according to some embodiments, in another embodiment, in a lateral sectional view;
Fig. 9 illustrates a variant of the structure according to the some embodiments;
Fig. 10 and 11 illustrate respective drawstrings which can be included in the garment according to some embodiments.

### DESCRIPTION

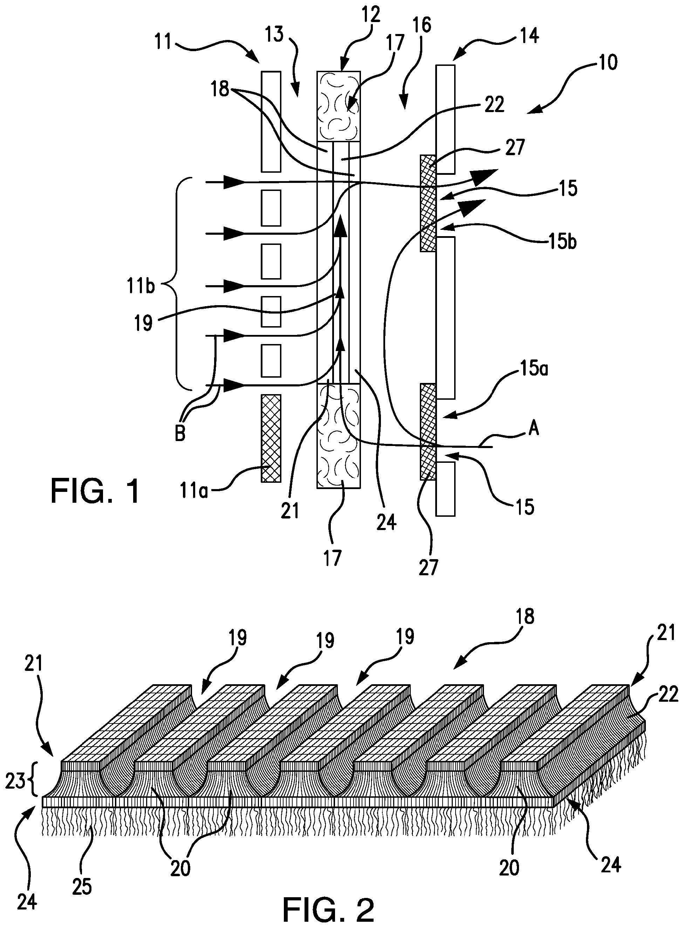

With reference to Figs. 1 to 5, the structure according to exemplary embodiments is indicated overall by the reference number 10 in a first embodiment. The structure may be used for a garment, for example, in the form of a coat, jacket, overcoat or similar type. Although garments as illustrated herein are heavier weight jacket articles, it is to be understood that the embodiments can be applied to various types of garment articles, including lightweight jackets and coats, articles of clothing, footwear including shoes and boots, and hats or other headgear such as helmets.

In some embodiments, the structure 10 includes an inner layer 11 facing the body of the wearer and extending for at least a portion of the garment, an intermediate layer of padding 12, forming together with the inner layer 11 a first gap 13, an outer layer 14 having air vents 15, for the entry of air from the outside and/or for the exit of moist warm air from inside the garment, and which forms together with the intermediate layer 12 a second gap 16.

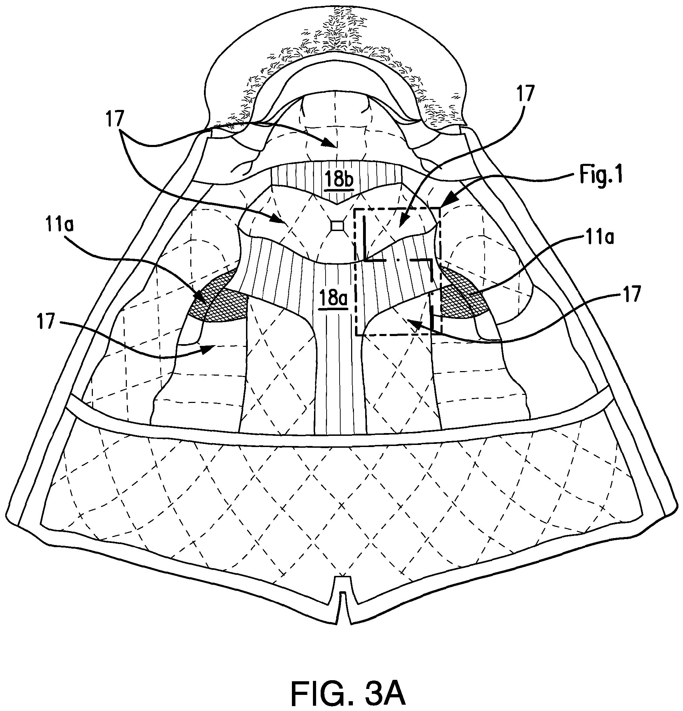

According to some embodiments, the intermediate layer 12 includes at least one padding 17 and, at least in certain zones, at least one channeled padding 18. In some embodiments, two sections having channeled padding layers 18a, 18b are provided in the example illustrated in Figs. 3A to 5 for the passage of said moist warm air from the inside to the exit air vents, as described below, and said air from the outside through the entry air vents and/or to the exit air vents, as described below. Briefly referring to Fig. 3A, the portion in the Fig. 1 box is illustrated in cross-section in Fig. 1 (with the cross-section corresponding to a cut perpendicular to the page and viewed in a direction parallel to the page). As shown in Fig. 3A, two sections 18a, 18b are provided. However, a single section, or more than two ventilating sections can be provided, and the sections can have various shapes.

As also shown in Figs. 1 and 3A, the channeled padding layer 18 is surrounded by padding 17 forming the interior or insulating portions of the garment. Typically the padding 17 is not directly exposed in the regions indicated at 17 in Fig. 3A, but rather, a liner is provided on the interior of the jacket and a shell or outer layer is provided on the outside of the jacket. Element 17 is provided in Fig. 3A to denote the regions at which the padding is provided.

Referring to the cross-section in the example of Fig. 1, in some embodiments, the outer layer 14 includes a textile which can be made from one or more of polyester, polyamide, polypropylene, wool, cotton or other fibers, synthetic or natural fibers or materials. The padding 17, on the other hand, can be preferably made of wadding, wool, felt, feathers and/or other similar materials able to hold back air between the fibers, for thermal insulation from the outside and for maintaining of heat around the human body, and preferably able to absorb sweat.

In Fig. 1, the layers 11, 12 and 14 are spaced apart in an exaggerated fashion in order to better show the gaps 13, 16 of the garment structure. Within the gaps 13, 16, the adjacent layer (11, 12 for gap 13; and 12, 14 for gap 16) are not continuously connected so as to allow the fluid flow as illustrated and discussed below. In some embodiments, a spacing layer could be provided to ensure a larger gap spacing in one or more of the gaps. In addition, in some embodiments the adjacent layers could be coupled to each other at one or more locations (e.g., by stitching, an adhesive and/or other fastening expedient) so as to prevent undesired excessive lateral movement (e.g., excessive relative vertical movement in Fig. 1 or excessive relative movement in a direction perpendicular to vertical), which could cause failure or lack of alignment of the various layers. However, it is desirable for there to be gaps 13, 16 between the layers to provide the desired fluid flow, and it is also preferable for the layers to be relatively movable to promote the flow of fluid, and thereby promote the ability of the structure to breathe. The ability of the garment to breathe (and remove moisture or vapor) is further enhanced by the configuration of the layers and their orientation in the garment as discussed further herein.
A magnification of the channeled padding 18 is illustrated in Fig. 2 with its structure described below. In the arrangement of Fig. 1, the layer 11 faces toward the body, while the layer 14 faces toward outside of the garment. It is to be understood that additional internal or external layers could be provided if desired. With reference to Figs. 1 and 2, in the preferred form, when the layer 18 is provided in a garment, the layer 21 faces toward the wearer, while layer 24 faces toward outside of the garment. In addition, the lengthwise or longitudinal direction of the channels preferably extends vertically, or at least with a component in the vertical direction (i.e., preferably with the channels not horizontal), to enhance fluid flow due to warmer air tending to rise. Thus, the longitudinal direction of the channels 19 is preferably vertical or oblique to vertical when the garment is in use. In some embodiments the direction or orientation of the longitudinal/lengthwise direction of the channels can correspond (or be parallel) to the direction of flow in gap 16 from inlet vents 15a to outlet vents 15b, and thus depend upon the desired locations of the vents 15a, 15b.

In some embodiments, as illustrated in the magnified view of Fig. 2, the channeled padding 18 is preferably formed of a three-dimensional textile having passages for sweat in the vapor phase, defined by a series of channels 19 disposed in the vertical direction with respect to the position of wearing the garment and able to transfer moist warm air, especially sweat in the vapor phase, toward the air vents 15 for escape of the sweat or vapor. The channels 19 are defined by a series of parallel ribs 20 alternating with the channels 19.

In some embodiments, the fabric of the channeled padding 18 in the illustrated example includes a first inner web 21, facing the body of the wearer, being breathable and able to direct the sweat in the liquid phase and in the vapor phase away from the body of the wearer, a second intermediate and spacing web 22, defining a gap 23 and the ribs 20, for the transfer of sweat in vapor phase from the first web 21 to the outside, where the ribs 20 alternate with the channels 19, and a third outer and breathable web 24, which is substantially analogous to the first web 21, where the second web 22 is between the web 21 and web 24.

In some embodiments, the first web 21 is provided with textile strips, each of which is disposed to a corresponding rib 20. The first web 21, and the strips which constitute the textile strips, as well as the second web 22, are preferably made of fibers of polyester, or polypropylene, or polyamide, or possibly other equivalent fibers. The textile strips of the first web have a width, for example, of not less than 2 mm and not greater than 6 mm; preferably, they have a width of about 3 mm.

The parallel ribs 20 advantageously have a thickness, for example, of not less than 2 mm and preferably between 3 and 4 mm in order to ensure a comfortable resilience. The channels 19 advantageously have an average width, for example, between about 2 and about 8 mm and preferably about 3 mm.

A three-dimensional textile, as understood by one of ordinary skill in the art, is a single textile whose constituent fibers are disposed in a mutually perpendicular planar relation. From the standpoint of the production process, in a 3D type weaving, the sets of X and Y fibers are interwoven with the rows and columns of the axial fibers Z. The X and Y fiber sets refer to, respectively, the horizontal and vertical weft sets. The Z fibers refer to the multilayered warp set. It is also possible to obtain three-dimensional textiles with 2D type weaving processes. Alternatively, with the warp-weft weaving, the three-dimensional fabrics can also be obtained by warp knit fabric or weft knit fabric processes, in which the movement of the needles of a knitting machine enables the interweaving of threads in the three spatial dimensions.

Three-dimensional textiles are generally formed by several layers, with a variable distance between the fibers, and they have optimal properties of absorption of kinetic energy, resilience, and shape recovery. Furthermore, they allow an excellent air flow, both transversely and longitudinally, within their structure.

It is to be understood by one of ordinary skill in the art that modifications and variations are possible. For example, although one strip section 21 is provided for each rib section 22, alternate ratios are possible. In addition, the shapes of the channels 19 or ribs 22 defining the same can vary. The textile of the channeled padding 18 has on its surface a fleece 25, at the third web 24 side, obtained, for example, by brushing or napping of the fibers making up the web itself.

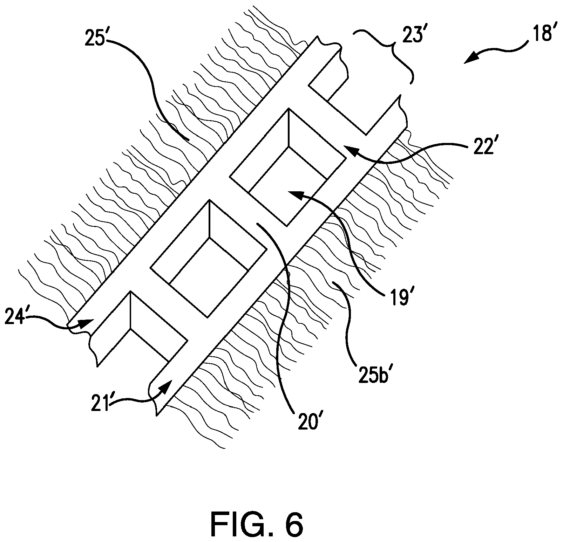

With reference to Fig. 6, so as not to compromise the insulation of the body and the feeling of comfort due to the thermal gradient between the temperature inside the garment, which is higher, and the temperature of the air entering from the outside, which is lower than the temperature inside the garment, the channeled padding, labeled 18' in Fig. 6, has a fleece 25a' at the third web 24'. The fleece 25a' may be obtained, for example, by processes of brushing or napping of the fibers making up the outer layer, and increases the degree of insulation of the dorsolumbar panel by way of the air appropriately held back between the fibers of said outer layer, maintaining the body of the wearer sufficiently insulated. In some embodiments, the second intermediate and spacing web 22' defines a gap 23' and ribs 20' alternating with channels 19'.

Advantageously, the process of brushing or napping can also be applied to the first web 21', which now comprises a continuous textile layer, obtaining a further fleece 25b' from the surface of the web, which thus, increases the overall insulation of the garment. The moist warm air from the first gap 13 enters the gap 23' through the first web 21', rises the channels 19' and gets into the second gap 16' through the third web 24'.

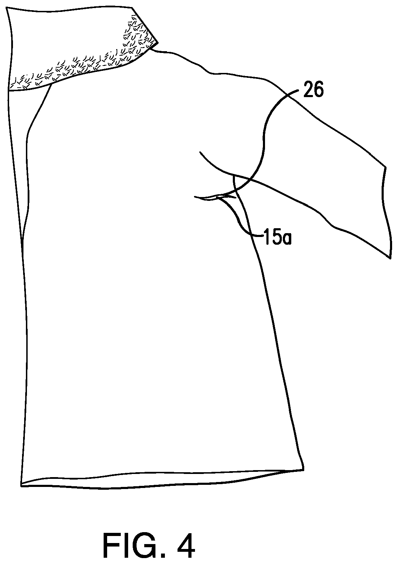

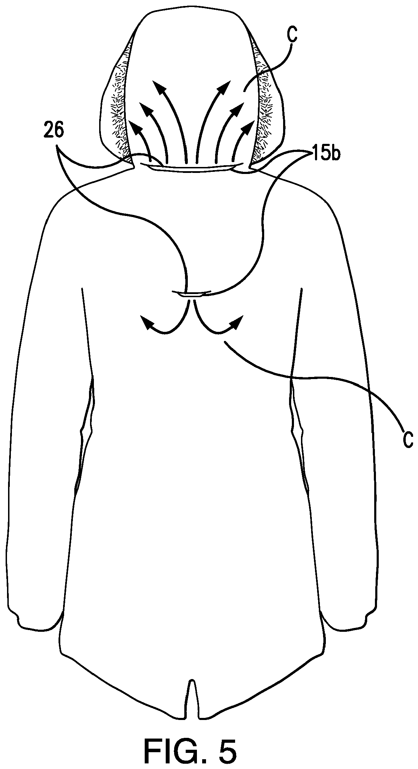

In some embodiments, the air vents 15 of the outer layer 14 are made in the area of the channeled padding 18 and are identifiable as first air vents 15a for the entry of air from the outside and second air vents 15b for exit of moist warm air from inside the garment. In particular, in the garment example illustrated, which is of the coat, jacket, overcoat or similar type, the first air vents 15a are made in the area of the armpit of the garment, as illustrated in Fig. 4, while the second air vents 15b are made one in the area of the dorsal zone, more particularly in the area of the shoulder blades, and the other in the area of the cervical zone, as illustrated in Fig. 5.

Advantageously, in a preferred example, the second air vents 15b are always open, while the entry air vents 15a can also be reversibly closable. Alternately, all air vents could be selectively closable, or for lighter weight garments they could be always open. An air vent that is selectively closable is adjustable for closure by a certain amount.

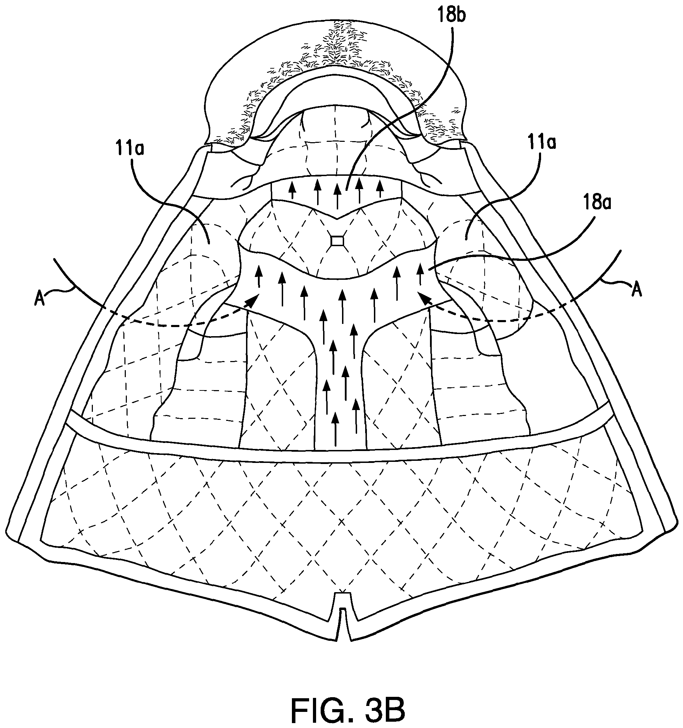

The air vents 15 provide communication between the inside of the garment and the outer environment. The structure 10 provides a flap of external textile 26 placed above the air vents 15, both the first 15a and the second 15b vents, to protect against entry of water. The air vent 15a can be provided in the form of a plurality of holes or plural air vents, and the air vent 15b can be a series of holes or plural air vents. In some embodiments, a channeled padding 18 extends in the dorsolumbar zone of the garment and has, as illustrated in Figs. 3A and 3B, a substantially Y-shaped configuration extending substantially up to a second air vent 15b (shown in Fig. 5), the one in the area of the dorsal zone, with a lower portion extending in substantially vertical direction, in regard to the position of the garment when worn, and with two upper diverging portions which develop as far as the first air vents 15a (shown in Fig. 4) in the area of the armpits of the garment. Although the shape of the section having the channeled padding can vary, the Y-shape is particularly advantageous as discussed below. Such a channeled padding region is indicated in Figs. 3A and 3B by reference number 18a, to distinguish it from another channeled padding 18b, described further below.

For purposes of climate control of the garment, with this particular formation of channeled padding, the air entering from the outside circulates in the second gap 16 and, in exiting, carries away the moist and warm air which is present in the gap, being transferred through the channeled padding 18 of the garment itself. In this way, one avoids overheating the body, without dissipation of heat and preventing condensation of moist air.

The circulation of the air inside the garment is promoted by the pump effect, generated by the oscillating movement of the arms, which force the surrounding air to enter into the second gap 16 of the garment by the first air vents 15a in the area of the armpits, and the warm air containing vapor to exit by the second gap 16 to the outer surroundings through the second air vent 15b in the area of the dorsal zone.

In some embodiments, the channeled padding 18 is configured to be inserted into the structure 10 such that the channels 19 are disposed in the direction of the second air vents 15b, able to facilitate the rising of sweat in the vapor phase and of incoming air from the bottom to the top.

The moist warm air resulting from sweating in fact has a natural tendency to expand on account of its heat and to always move from bottom to top. The moist warm air, while rising in the channels 19, easily gets through the third web 24 and into the second gap 16.

In addition to forcing of the moist warm air present inside the garment to be carried in the channels 19, the cold air entering from the outside by the effect of its own velocity locally generates a dynamic pressure increase with consequent decreasing of the vapor pressure, thus favoring the evaporation of sweat in the liquid phase. The particular Y-shape has been certified in a wind tunnel: and is advantageous because it allows a lowering of the internal temperature of the garment by 0.5-1.0° C.

The lowering of the internal temperature of the garment is advantageous because, when the body is overheated, the ventilation enables a cooldown of the temperature and a carrying away of the heat generated, which delays the triggering of the wearer's sweating mechanism and/or resulting in better evaporation and subsequent condensation of the sweat. Consequently, this makes it possible to avoid a feeling of discomfort of the wearer.

Wind tunnel tests, at velocity between 5 and 15 km/h, were carried out with the help of a manikin wearing a jacket, on which a panel containing pressure sensors was placed. The finding obtained is that the greatest depression is found in the zone of the spinal cord, the waist, the shoulder blades and the top of the shoulder. These zones appear ideal for the placement of exit air vents. On the contrary, the abdominal-pectoral zone is subject to an overpressure, and therefore, ideal for the incoming air vents, in order to allow the initiation of an air circulation between the front and rear of the garment.

The effect of the movement of the arm on the pressure in the axillary zone was studied in regard to the movement of the arm which may occur while walking: having placed pressure sensors appropriately in the axillary zone, a pressure difference was found, at 15 km/h, between 6 and 10 Pa by moving from outstretched arm to arm forward, thus causing a pumping of outside air into the garment through the axillary air vents.

In addition, thermographic recordings have shown how the temperature inside the garment varies in a zone between the lower part of the garment and a U-shaped profile in the area of the shoulder blades. Since it was desirable to isolate the flank portion of the wearer's body from the outer surroundings, the Y-shape of the channeled padding was particularly advantageous.

Advantageously, the above-described fleece 25 makes it possible not to compromise the insulation of the body and the feeling of comfort, despite the thermal gradient between the temperature inside the garment, which is higher, and the temperature of the air entering from the outer surroundings, which is lower than the temperature inside the garment. The fleece 25 in fact increases the degree of insulation of the channeled padding 18 due to the air trapped between the fibers of the third web 24, keeping the body of the wearer thermally insulated.

As noted previously, the textile of the channeled padding can in some embodiments, (Fig. 6, showing one variant of the three-dimensional textile) be provided with a fleece also from the first web, once again obtained by means of brushing or napping of the fibers making up the layer itself, to increase the degree of overall insulation of the garment.

Another channeled padding, indicated in Figs. 3A and 3B as 18b, extends into the dorsocervical zone of the same garment. The composition of this channeled padding 18b is analogous to that previously described, and the channels 19 are once again disposed from bottom to top to facilitate the rising of the sweat in vapor phase from the bottom to the top, in the direction of the second air vent 15b made in the area of the cervical zone.

By the effect of the ability of the moist warm air to move always from bottom to top, this rises along the channels 19 of the second channeled padding 18b until it reaches the area of the shoulders, where it crosses the third web 24 and emerges through the second air vent 15b into the cervical zone.

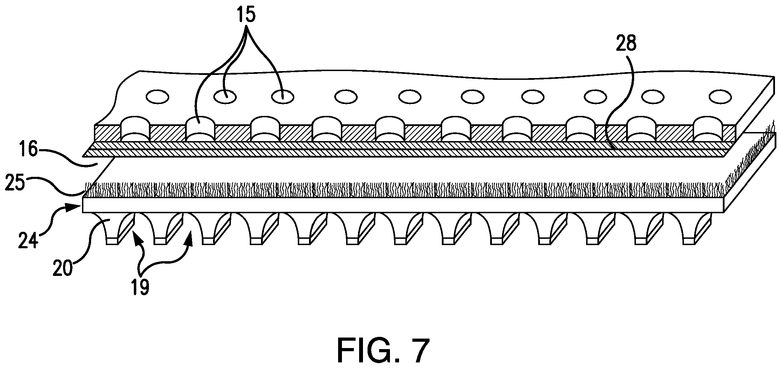

With particular reference to Fig. 7, in the zone where the air vents 15 are defined, which extends internally to the outer protective cover, there is placed a membrane 28 impermeable to water in the liquid state and permeable to water vapor, which allows for an evacuation of the water vapor to the outside. In this way, the water coming from the outside, for example in the form of rain, cannot get in, while the water vapor can easily escape and ensure the natural thermal regulation of the human body.

In some embodiments, the inner layer 11 can be made entirely of a narrow-mesh fabric, in the case of a garment intended for outdoor temperatures of the coldest climates, or it can optionally have, as illustrated in the portion of Fig. 1 and in (Fig.3A and) Fig. 3B, a perforated first portion 11a, substantially net-like, in the area of the air vents 15, especially the first ones 15a. The inner layer 11 can also comprise a second air permeable or perforated portion 11b, illustrated in Fig. 1, which is placed on top of the channeled padding 18 at the side facing the wearer, optionally both that in the area of the dorsolumbar zone, indicated as 18a, and that in the area of the dorsocervical zone, indicated as 18b. The latter 11b can be omitted, leaving the channeled padding 18 visible, as in the garment example illustrated, to increase the entry of warm moist air into the channels 19.
Preferably, in some embodiments, the second perforated portion 11b has a larger mesh than the first one 11a.

In the area of each air vent 15, the outer layer 14 has a breathable textile 27 (indicated in Fig. 1), preferably perforated, to prevent the entry of insects or other foreign bodies into the garment. The same outer layer 14 can also have a membrane impermeable to water in the liquid state and permeable to water vapor.

Such a membrane prevents water from entering the garment from outside, while allowing water vapor to exit the garment. A garment made from an outer textile having this membrane combines an improved internal ventilation with the merit of waterproofness and breathability (albeit to a lesser degree in absolute terms).

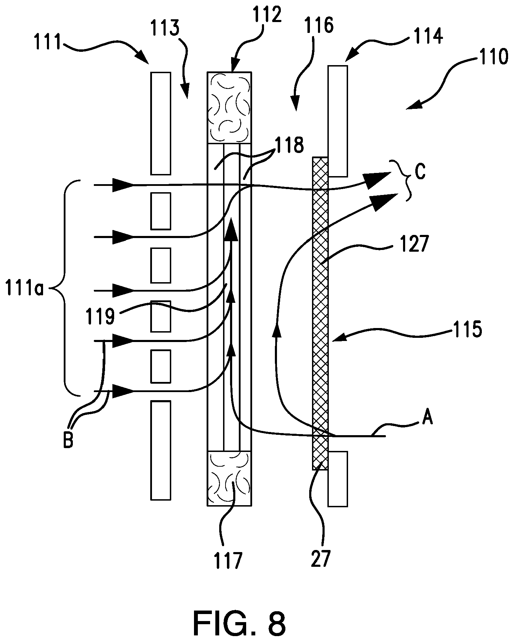

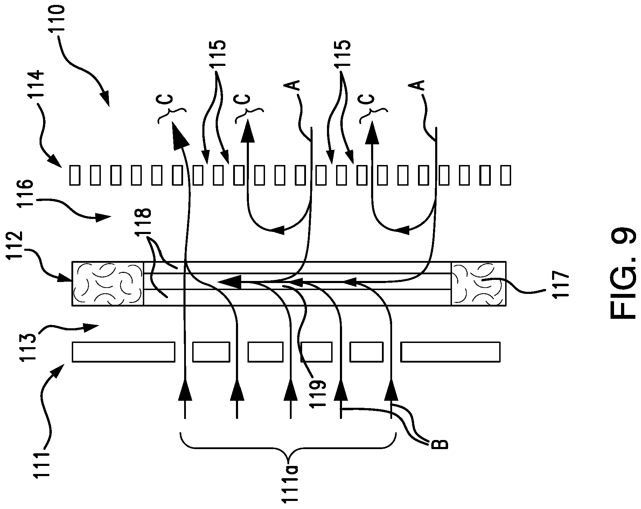

With regard to Fig. 8 and 9, an example of a second embodiment of the structure is indicated overall by reference number 110. Similar to the first example, this example includes an inner layer 111 facing the body of the wearer, an intermediate layer 112 of padding, forming together with the inner layer first gap 113, an outer layer 114 having air vents 115, for the entry of air from the outside and/or for the exit of moist warm air from inside the garment, and which makes with the aforesaid intermediate layer 112 a second gap 116.

In some embodiments, the intermediate layer 112 is composed of a padding 117 and two channeled paddings 118. The air vents 115 are made in the area of the channeled paddings 118, and these are similar to the ones described for the first embodiment and made with the same three-dimensional textile, for the passage of sweat in the vapor phase, produced by the body of the wearer, and therefore, with preferred passages defined by channels 119 to transfer the sweat to the higher part of the air vent 115, by which the air flow coming from the outside enters through its lower part.

One channeled padding 118, like the previous one 18a, has a substantially Y-shaped configuration, extending substantially up to the dorsal zone, with a lower portion extending in a substantially vertical direction in regard to the position of use of the garment when worn, and with two diverging upper portions which develop substantially up to the armpits of the garment. The other channeled padding 118, again like the previous one 18b, extends into the dorsocervical zone of the garment.

This second embodiment is different from the previous one since the air vents 115 extend along the flanks of the garment, once again of the coat, jacket, overcoat or similar type, and at the same time constitute air vents for the entry of air from the outside and air vents for the exit of the moist warm air from the inside of the garment.

Figure 9 illustrates one variant of this second embodiment, whereby the outer layer 114 is formed substantially by a net, whose holes constitute the air vents 115. In this way, the air vents 115 extend substantially throughout the whole garment. Furthermore, in this second embodiment the inner layer 111 comprises a perforated portion 111a in the area of the air vents 115.

The perforated portion 111a extends substantially throughout the whole garment. Furthermore, in the second embodiment, there can be preferably present the breathable textile 127 in the area of the air vents 115, while in the variant of the second embodiment the air vents 115 are sufficiently small to prevent the entry of many foreign objects and therefore do not need such a breathable textile.

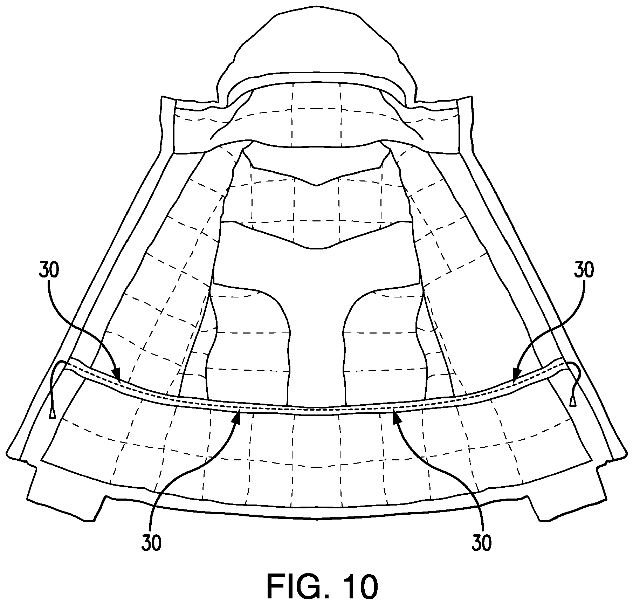

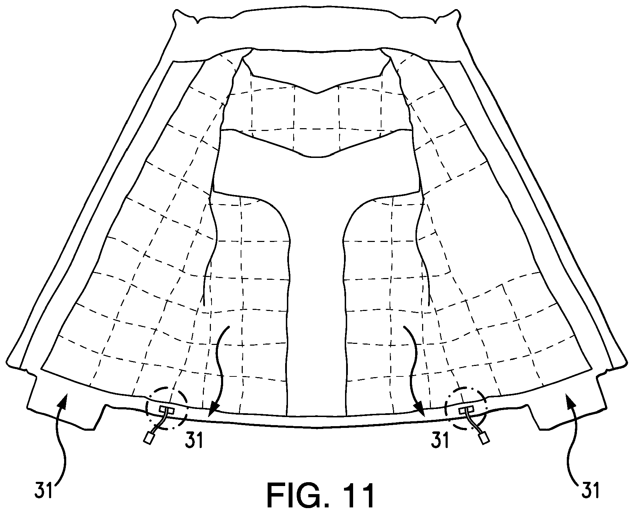

In some embodiments, the garment structure can also have at least one drawstring, as illustrated in Fig. 10 and 11. In one example, the drawstring 30 is located at the waist. When the drawstring 30 is pulled taut, it does not allow the entry of air in the garment from below, and therefore the garment should have entry openings and exit openings. In some embodiments, the entry openings can be always open or reversibly closable, while the exit openings are always open.

In a second example, the drawstring 31 (Fig. 11), is placed at the lower end of the garment. In this example, even when the drawstring 31 is pulled taut, it is not able to close the entry of air from below, and therefore it can be sufficient to have the exit openings in the garment always be open.

The drawstring can be placed at (i) the waist and/or at (ii) the lower end of the garment. In the first case (i) the drawstring, if pulled taut, can make the garment firmly adhere the body of the wearer (with the layers also held closely against each other to reduce or avoid flow in the gaps), so the outside air is not allowed to get into the garment. In other words, once the drawstring is pulled taut, the outside air is prevented from entering into the garment. In the second case (ii) the drawstring, even if pulled taut (e.g., in the absence of a waist drawstring or if a waist drawstring is not taut), some outside air can enter into the garment from the lower side of the garment. Alternate drawstring or attachment/closing expedients may be provided for one or more of the air vents or air vent regions. For example, an external flap can be provided which is open or in a loose configuration when venting is desired, but when venting is not desired, the flap can cover and be held over the vent opening by a drawstring or other securing expedient. Advantageously, in some embodiments, one can also provide entry openings only of the reversibly closable type.

An example functioning of the structure according to the embodiments is as follows. Figure 1 shows the path of the air entering the garment, indicated by the letter A, and the path of the moist warm air, indicated by letter B, coming from inside the garment. In particular, the incoming air flow (indicated by A also in Fig. 3B) from the first air vents 15a, which are present in the area of the armpits in the example, crosses the breathable textile 27 of the outer layer 14. One portion of this incoming air passes through the fleece 25 and is then tempered by the heat of the air already present inside the garment and trapped between the fibers of the fleece 25, and it then passes through the third layer 24 and enters into the channels 19 of the channeled padding 18 of the intermediate layer 12, as illustrated in Fig. 1.

The air is then forced, by the pumping effect due to the oscillating movement of the arms, and heated by the warm air between the fibers of the fleece 25, rising to the top in the direction of the second air vents 15b and carrying along the moist warm air (whose flow is indicated by B) present inside the garment, in turn already present inside the channels 19 after having passed through the inner layer 11 and channeled into the channeled padding 18.

Besides forcing the moist warm air present inside the garment to be channeled into the channels 19, the cold air entering from the outside, by the effect of its own velocity, locally generates an increase in the dynamic pressure with a consequent decrease in the vapor pressure, thus favoring the evaporation of sweat in the liquid phase. The remaining portion of air entering by the first air vents 15a, on the other hand, having crossed the breathable textile 27 and rising upward, by the effect of the increased dynamic pressure, flows into the second gap 16 to exit by the second air vent 15b, contributing to the ventilation of the body.

The overall flow of air leaving the garment is indicated by C in Fig. 1 and 5.
In the example, the first gap 13 maintains the heat inside the garment, and the transfer of vapor and exchange of air occur through the channeled padding 18. The exchange of air and vapor takes place in the second gap 16.

In the second embodiment, the functioning of the structure 110 is similar to that previously described for the structure 10. Also, in Figs. 8 and 9 the lines A and B indicate respectively the flow of air coming into the garment and the flow of moist warm air coming from inside the garment. In this embodiment, unlike the previous one, the air vents 115 themselves enable a flow of air, both incoming and outgoing, and extend for a sufficient length to allow the incoming air to carry away the moist warm air present inside the garment.

As understood by one of ordinary skill in the art, in both embodiments the air vents 15 and 115 allow the air to enter from the outside and to leave, carrying away the moist warm air present inside the garment. Furthermore, the padding 17 insulates the body of the wearer, holding back the warm air mixing with the incoming cold air.

In practice it has been found that the embodiments disclosed herein achieve the intended aim and objects, providing a ventilated and breathable garment structure, able to ensure a state of comfort for the human body by ensuring an adequate air exchange and at the same time avoiding a dissipation of the warmth needed to protect the body against cold, without thereby preventing the natural thermal regulation of the human body.

The structure is able to ensure an adequate level of fluid flow or breathing and ventilation so that the wearer can move around more or less strenuously without becoming cold or sweating within a large temperature range, from warm to cold, and without experiencing an uncomfortable state in the event of rapid and sudden temperature variations.

The embodiments, so conceived, are susceptible of numerous modifications and variations, all of which are within the scope of the invention, which is defined by the appended claims; furthermore, all of the details can be replaced by other technically equivalent elements.

In practice, the materials used, as long as they are compatible with the specific use, as well as the contingent dimensions and shapes, may be vary according to the requirements and to the state of the art.

Where technical features mentioned in any claim are followed by reference signs or element numbers, these reference signs have been included for the sole purpose of increasing the understanding of the claims and accordingly such reference signs do not have any limiting effect on the interpretation of each element identified by way of example by such reference signs.

## Claims

1. A ventilated and breathable garment structure (10, 110), comprising:
an inner layer (11, 111) facing the body of a wearer of a garment and extending for at least a portion of the garment; the garment structure being **characterized by** comprising:
an intermediate layer (12, 112) of padding that forms together with the inner layer (11, 111) a first gap (13, 113); and
an outer layer (14, 114) having air vents (15, 115) for the entry of air from the outside of the garment and/or for the exit of moist warm air from inside the garment, and that forms together with said intermediate layer (12, 112) a second gap (16, 116),
wherein said intermediate layer includes, in one or more zones, at least one channeled padding (18, 18', 118) for the passage of said moist warm air and said air from the outside.

2. The structure according to claim 1, wherein said air vents (15) are made in the area of said channeled padding (18), or wherein said air vents (15) are configured to be always open.

3. The structure according to one or more of the preceding claims, wherein said air vents (15) include first air vents (15a) for the entry of air from the outside and second air vents (15b) for exit of moist warm air from inside the garment.

4. The structure according to one or more of the preceding claims, wherein said inner layer (11, 111) has at least one first perforated portion (11a, 111a) in the area of at least said first air vents (15, 115).

5. The structure according to claim 1, wherein said outer layer (14, 114) includes a breathable fabric (27, 127) in the area of each air vent (15, 115).

6. The structure according to one or more of the preceding claims, wherein said outer layer (14) comprises a membrane which is impermeable to water in the liquid state and permeable to water vapor.

7. The structure according to one or more of the preceding claims, wherein said first air vents (15a) are made in the area of the armpit of a garment of the coat, jacket, overcoat or similar type.

8. The structure according to one or more of the preceding claims, wherein at least one second air vent (15b) is made in the area of the dorsal zone or the cervical zone.

9. The structure according to one or more of the preceding claims, wherein said air vents (115) extend along the flanks of a garment of the coat, jacket, overcoat or similar type.

10. The structure according to one or more of the preceding claims, wherein at least one portion of said channeled padding (18, 18', 118) extends into the dorsolumbar zone of a garment of the coat, jacket, overcoat or similar type, wherein preferably said channeled padding (18, 18', 118) extends into the dorsocervical zone of a garment of the coat, jacket, overcoat or similar type.

11. The structure according to one or more of the preceding claims, wherein said channeled padding (18) has a substantially Y-shaped conformation, developing substantially up to a second air vent (15b) in the area of the dorsal zone, with a lower portion extending in substantially vertical direction, in regard to the position of the garment when worn, and with two upper diverging portions which develop up to first air vents (15a) in the area of the armpits of the garment, or
wherein said channeled padding (118) has a substantially Y-shaped conformation, developing substantially up to the dorsal zone, with a lower portion extending in substantially vertical direction, in regard to the position of the garment when worn, and with two upper diverging portions which develop up to the armpits of the garment.

12. The structure according to one or more of the preceding claims, wherein said channeled padding (18, 18', 118) is composed of a three-dimensional textile having passages for moist warm air, defined by a series of channels (19, 19') disposed in the vertical direction relative to the position of wearing the garment and configured to transfer said moist warm air toward said air vents (15, 115) for the exit of said moist warm air,
the structure preferably further comprising parallel ribs (20, 20') alternating with said channels (19, 19'),
wherein further preferably the textile of said channeled padding (18, 18') comprises: a first inner web (21), facing the body of the wearer, being breathable and able to direct sweat in the liquid phase and in the vapor phase away from the body of the wearer, a second intermediate and spacing web (22, 22'), defining a gap (23, 23') and said ribs (20, 20') for the transfer of sweat in vapor phase from the first web (21, 21') to the outside, said ribs (20, 20') alternating with said channels (19, 19'), and a third outer and breathable web (24, 24'), wherein the second web (22, 22') is between the third web (24, 24') and the first web (21).

13. The structure according to claim 12, wherein the textile of said channeled padding (18, 18') includes a fleece (25, 25a', 25b') on at least on the side of said third web (24, 24'), said fleece (25, 25a', 25b') formed by means of brushing or napping of the fibers that form the web itself.

14. The structure according to one or more of the preceding claims, further including at least one drawstring (30, 31).

15. The structure according to claim 14, wherein said drawstring (30) is located at the waist, said garment having entry openings which are always open or reversibly closable, said exit openings being always open, or
wherein said drawstring (31) is located at the lower end of the garment, which has exit openings that are always open, wherein preferably said garment further includes entry openings that are reversibly closable.

## Patentansprüche

1. Eine belüftete und atmungsaktive Bekleidungsstruktur (10, 110), die Folgendes umfasst:
eine innere Schicht (11, 111), die dem Körper eines Trägers eines Kleidungsstücks zugewandt ist und sich über mindestens einen Teil des Kleidungsstücks erstreckt; wobei die Bekleidungsstruktur **dadurch gekennzeichnet ist, dass** sie Folgendes umfasst:
eine intermediäre Schicht (12, 112) einer Polsterung, die gemeinsam mit der inneren Schicht (11, 111) einen ersten Abstand (13, 113) bildet, und
eine äußere Schicht (14, 114), die Luftlöcher (15, 115) für den Eintritt von Luft von der Außenseite des Kleidungsstücks und/oder für den Austritt warmer feuchter Luft aus dem Inneren des Kleidungsstücks hat, und die gemeinsam mit der intermediären Schicht (12, 112) einen zweiten Abstand (16, 116) bildet,
wobei die intermediäre Schicht in einer oder mehreren Zonen mindestens eine mit Kanälen versehene Polsterung (18, 18', 118) für den Durchlass der warmen feuchten Luft und der Luft von außen hat.

2. Die Struktur gemäß Anspruch 1, wobei die Luftlöcher (15) im Bereich der mit Kanälen versehenen Polsterung (18) angebracht sind oder wobei die Luftlöcher (15) ausgebildet sind, um immer offen zu sein.

3. Die Struktur gemäß einem oder mehreren der obigen Ansprüche, wobei die Luftlöcher (15) erste Luftlöcher (15a) für den Eintritt von Luft von außen und zweite Luftlöcher (15b) für den Austritt feuchter warmer Luft aus dem Inneren des Kleidungsstücks einschließen.

4. Die Struktur gemäß einem oder mehreren der obigen Ansprüche, wobei die innere Schicht (11, 111) mindestens einen ersten perforierten Abschnitt (11a, 111a) im Bereich mindestens der ersten Luftlöcher (15, 115) hat.

5. Die Struktur gemäß Anspruch 1, wobei die äußere Schicht (14, 114) in dem Bereich jedes Luftlochs (15, 115) einen atmungsaktiven Stoff (27, 127) einschließt.

6. Die Struktur gemäß einem oder mehreren der obigen Ansprüche, wobei die äußere Schicht (14) eine Membran umfasst, die undurchlässig für Wasser im flüssigen Zustand und durchlässig für Wasserdampf ist.

7. Die Struktur gemäß einem oder mehreren der obigen Ansprüche, wobei die ersten Luftlöcher (15a) im Bereich der Achselhöhle eines Kleidungsstücks des Mantels, der Jacke oder dergleichen angebracht sind.

8. Die Struktur gemäß einem oder mehreren der obigen Ansprüche, wobei mindestens ein zweites Luftloch (15b) im dorsalen Bereich oder im Zervixbereich angebracht ist.

9. Die Struktur gemäß einem oder mehreren der obigen Ansprüche, wobei die Luftlöcher (115) sich entlang den Seiten eines Kleidungsstücks des Mantels, der Jacke oder dergleichen erstrecken.

10. Die Struktur gemäß einem oder mehreren der obigen Ansprüche, wobei mindestens ein Abschnitt der mit Kanälen versehenen Polsterung (18, 18', 118) sich in den dorsolumbaren Bereich eines Kleidungsstücks des Mantels, der Jacke oder dergleichen erstreckt, wobei sich die mit Kanälen versehene Polsterung (18, 18', 118) vorzugsweise in den dorsozervikalen Bereich eines Kleidungsstücks des Mantels, der Jacke oder dergleichen erstreckt.

11. Die Struktur gemäß einem oder mehreren der obigen Ansprüche, wobei die mit Kanälen versehene Polsterung (18) im Wesentlichen eine Y-Form hat, die sich im Wesentlichen bis zu einem zweiten Luftloch (15b) im dorsalen Bereich entwickelt, wobei ein unterer Abschnitt sich in eine im Wesentlichen vertikale Richtung mit Bezug auf die Position des Kleidungsstücks im getragenen Zustand und mit zwei oberen sich verzweigenden Abschnitten erstreckt, die sich bis zu ersten Luftlöchern (15a) im Bereich der Achselhöhlen des Kleidungsstücks entwickeln; oder
wobei die mit Kanälen versehene Polsterung (118) im Wesentlichen eine Y-Form hat, die sich im Wesentlichen bis zum dorsalen Bereich entwickelt, wobei sich ein unterer Abschnitt im Wesentlichen in die vertikale Richtung, mit Bezug auf die Position des Kleidungsstücks im getragenen Zustand, erstreckt, und mit zwei oberen sich verzweigenden Abschnitten, die sich bis zu den Achselhöhlen des Kleidungsstücks entwickeln.

12. Die Struktur gemäß einem oder mehreren der obigen Ansprüche, wobei die mit Kanälen versehene Polsterung (18, 18', 118) aus einem dreidimensionalen Stoff besteht, der Durchlässe für feuchte warme Luft hat, bestimmt durch eine Reihe von Kanälen (19, 19'), die in vertikaler Richtung relativ zur Trageposition des Kleidungsstücks angeordnet und ausgebildet sind, um die feuchte warme Luft zum Zwecke des Austritts der feuchten warmen Luft zu den Luftlöchern (15, 115) zu transportieren,
wobei die Struktur vorzugsweise weiter parallele Rippen (20, 20') umfasst, die sich mit den Kanälen (19, 19') abwechseln, wobei der Stoff der mit Kanälen versehenen Polsterung (18, 18') vorzugsweise weiter Folgendes umfasst: eine erste innere Bahn (21), die dem Körper des Trägers zugewandt, atmungsaktiv und in der Lage ist, Schweiß in der Flüssigphase und in der Dampfphase vom Körper des Trägers fort zu leiten; eine zweite intermediäre und beabstandende Bahn (22, 22'), die eine Lücke (23, 23') und die Rippen (20, 20') für den Transport von Schweiß in der Dampfphase von der ersten Bahn (21, 21') nach außen bestimmt, wobei die Rippen (20, 20') sich mit den Kanälen (19, 19') abwechseln; und eine dritte äußere und atmungsaktive Bahn (24, 24'), wobei sich die zweite Bahn (22, 22') zwischen der dritten Bahn (24, 24') und der ersten Bahn (21) befindet.

13. Die Struktur gemäß Anspruch 12, wobei der Stoff der mit Kanälen versehenen Polsterung (18, 18') ein Vlies (25, 25a', 25b') mindestens auf der Seite der dritten Bahn (24, 24') einschließt, wobei das Vlies (25, 25a', 25b') durch das Bürsten oder Aufrauen der Fasern geformt ist, die die Bahn selbst bilden.

14. Die Struktur gemäß einem oder mehreren der obigen Ansprüche, die weiter mindestens ein Zugband (30, 31) einschließt.

15. Die Struktur gemäß Anspruch 14, wobei sich das Zugband (30) an der Taille befindet, wobei das Kleidungsstück Eintrittsöffnungen hat, die immer offen oder reversibel verschließbar sind, wobei die Austrittsöffnungen immer offen sind; oder
wobei sich das Zugband (31) am unteren Ende des Kleidungsstücks befindet, das Austrittsöffnungen hat, die immer offen sind, wobei das Kleidungsstück vorzugsweise weiter Eintrittsöffnungen einschließt, die reversibel verschließbar sind.

## Revendications

1. Structure de vêtement ventilée et respirante (10, 110), comprenant:
une couche intérieure (11, 111) tournée vers le corps d'un utilisateur d'un vêtement et s'étendant sur une partie au moins du vêtement ; la structure de vêtement étant **caractérisée en ce qu'**elle comprend :
une couche intermédiaire (12, 112) de rembourrage formant un premier espace (13, 113) avec la couche intérieure (11, 111) ; et
une couche extérieure (14, 114) comportant des prises d'air (15, 115) pour l'entrée d'air depuis l'extérieur du vêtement et/ou pour la sortie d'air chaud humide depuis l'intérieur du vêtement, et formant un deuxième espace (16, 116) ensemble avec ladite couche intermédiaire (12, 112),
dans laquelle ladite couche intermédiaire comprend, dans une ou plusieurs zones, au moins un rembourrage cannelé (18, 18', 118) pour le passage dudit air chaud humide et dudit air arrivant de l'extérieur.

2. Structure selon la revendication 1, dans laquelle lesdites prises d'air (15) sont réalisées dans la région dudit rembourrage cannelé (18), ou dans laquelle lesdites prises d'air (15) sont configurées pour être toujours ouvertes.

3. Structure selon l'une ou plusieurs des revendications précédentes, dans laquelle lesdites prises d'air (15) comprennent des premières prises d'air (15a) pour l'entrée d'air depuis l'extérieur et des deuxièmes prises d'air (15b) pour la sortie d'air chaud humide depuis l'intérieur du vêtement.

4. Structure selon l'une ou plusieurs des revendications précédentes, dans laquelle ladite couche intérieure (11, 111) comporte au moins une première partie perforée (11a, 111a) au moins dans la région desdites premières prises d'air (15, 115).

5. Structure selon la revendication 1, dans laquelle ladite couche extérieure (14, 114) comprend un tissu respirant (27, 127) dans la région de chaque prise d'air (15, 115).

6. Structure selon l'une ou plusieurs des revendications précédentes, dans laquelle ladite couche extérieure (14) comprend une membrane imperméable à l'eau dans l'état liquide et perméable à la vapeur d'eau.

7. Structure selon l'une ou plusieurs des revendications précédentes, dans laquelle lesdites premières prises d'air (15a) sont réalisées dans la région que l'aisselle d'un vêtement du type veste, blouson, manteau ou similaire.

8. Structure selon l'une ou plusieurs des revendications précédentes, dans laquelle au moins une deuxième prise d'air (15b) est réalisée dans la région de la zone dorsale ou de la zone cervicale.

9. Structure selon l'une ou plusieurs des revendications précédentes, dans laquelle lesdites prises d'air (115) s'étendent le long des côtés d'un vêtement du type veste, blouson, manteau ou similaire.

10. Structure selon l'une ou plusieurs des revendications précédentes, dans laquelle une partie au moins du rembourrage cannelé (18, 18', 118) s'étend dans la zone dorso-lombaire d'un vêtement du type este, blouson, manteau ou similaire, ledit rembourrage cannelé (18, 18', 118) s'étendant de préférence dans la zone dorso-cervicale d'un vêtement du type este, blouson, manteau ou similaire.

11. Structure selon l'une ou plusieurs des revendications précédentes, dans laquelle ledit rembourrage cannelé (18) présente une configuration substantiellement en forme de Y, remontant substantiellement jusqu'à une deuxième prise d'air (15b) dans la région de la zone dorsale, avec une partie inférieure s'étendant substantiellement dans la direction verticale, par rapport à la position du vêtement lorsque celui-ci est porté, et avec deux parties supérieures différentes remontant jusqu'à des premières prises d'air (15a) dans la région des aisselles du vêtement, ou
dans laquelle ledit rembourrage cannelé (118) présente une configuration substantiellement en forme de Y, remontant substantiellement jusqu'à la zone dorsale, avec une partie inférieure s'étendant substantiellement dans la direction verticale, par rapport à la position du vêtement lorsque celui-ci est porté, et avec deux parties supérieures différentes remontant jusqu'aux aisselles du vêtement.

12. Structure selon l'une ou plusieurs des revendications précédentes, dans laquelle ledit rembourrage cannelé (18, 18', 118) est constitué d'un textile tridimensionnel comportant des passages pour de l'air chaud humide, définis par une série de canaux (19, 19') disposés dans la direction verticale par rapport à la position du vêtement lorsque celui-ci est porté, et configurés pour transférer dudit air chaud humide vers lesdites prises d'air (15, 115) pour la sortie dudit air chaud humide,
la structure comprenant de préférence également des nervures parallèles (20, 20') alternant avec lesdits canaux (19, 19'),
dans laquelle le textile dudit rembourrage cannelé (18, 18') comprend de préférence également : une première toile intérieure (21) tournée vers le corps de l'utilisateur, laquelle est respirante et capable de diriger de la transpiration à l'état liquide et à l'état de vapeur à distance du corps de l'utilisateur, une deuxième toile intermédiaire espacée (22, 22') définissant un espace (23, 23') et lesdites nervures (20, 20') pour transférer de la transpiration à l'état de vapeur à partir de la première toile (21, 21') vers l'extérieur, lesdites nervures (20, 20') alternant avec lesdits canaux (19, 19'), et une troisième toile extérieure respirante (24, 24'), la deuxième toile (22, 22') se trouvant entre la troisième toile (24, 24') et la première toile (21).

13. Structure selon la revendication 12, dans laquelle le textile dudit rembourrage cannelé (18, 18') comprend de la laine polaire (25, 25a', 25b') au moins sur le côté de ladite troisième toile (24, 24'), ladite laine polaire (25, 25a', 25b') étant formée par brossage ou grattage des fibres constituant la toile elle-même.

14. Structure selon l'une ou plusieurs des revendications précédentes, comprenant également au moins un cordon (30, 31) .

15. Structure selon la revendication 14, dans laquelle ledit cordon (30) se trouve au niveau de la taille, ledit vêtement comportant des ouvertures d'entrée toujours ouvertes ou refermables de manière réversible, lesdites ouvertures de sortie étant toujours ouvertes, ou
dans laquelle ledit cordon (31) se trouve au niveau de l'extrémité inférieure du vêtement, lequel comportant des ouvertures de sortie étant toujours ouvertes, ledit vêtement comportant de préférence également des ouvertures d'entrée refermables de manière réversible.
